# EUROPEAN PATENT APPLICATION

(11) **EP 4 733 172 A1**
(43) Date of publication of application: **29.04.2026**
(21) Application number: 23942611.7
(22) Date of filing: 26.06.2023
(51) Int. Cl.: B62D 1/19, B62D 1/183

(54) **STEERING DEVICE**

(71) Applicant: JTEKT CORPORATION, Kariya-shi, Aichi 448-8652 (JP)
(72) Inventor: NOZAWA, Yasuyuki, Kariya-shi, Aichi 448-8652 (JP); TOKIOKA, Ryoichi, Kariya-shi, Aichi 448-8652 (JP); OONO, Yoshihiro, Kariya-shi, Aichi 448-8652 (JP)
(74) Representative: Winter, Brandl - Partnerschaft mbB
(86) International application number: PCT/JP2023/023599
(87) International publication number: WO 2025/004143

(57) **Abstract**

A steering system (100) for steer-by-wire that holds an operating member (200) movably between a first position that is a position of the operating member (200) at which the operating member is able to be operated by a driver, and a second position that is further forward in the vehicle than the first position, the steering system (100) including a fixed member (110) that is attached to a vehicle body, a movable member (120) that supports the operating member (200) and that is attached to the fixed member (110) so as to be movable in a front-rear direction of the vehicle, a drive device (130) that moves the movable member (120) in the front-rear direction relative to the fixed member (110) and fixes the operating member (200) at the first position and the second position, and an impact absorbing mechanism (140) that is connected between the movable member (120) and the drive device (130) in a manner interposed therebetween, and that, in a case in which a first load L1 is applied to the movable member (120) from forward toward rearward in the vehicle, is deformed by the first load L1 and also allows the movable member (120) to move rearward in the vehicle.

## Description

### TECHNICAL FIELD

The present invention relates to a steering system that can move an operating member that is operated by a driver forward in a vehicle.

### BACKGROUND ART

Conventionally, in a retractable steering system, in which an operating member such as a steering wheel can be moved forward in a vehicle and stored in a dashboard or the like, there is a steering system having a structure in which, in a case of a collision occurring while a driver is operating the operating member, impact of a secondary collision in which the driver collides with the operating member is mitigated by deforming the members thereof or the like (e.g., see Patent Document 1).

### Related Art Documents

### Patent Documents

Patent Document 1: Japanese Unexamined Patent Application Publication No. 2020-179841 (JP 2020-179841 A)

### SUMMARY OF THE INVENTION

### Problem to be Solved by the Invention

However, in the event of a collision occurring in a state of automated driving in which the operating member is stored in the dashboard, there is a problem that a column that holds the operating member 200 is present in a vicinity of a vehicle cabin side of a dash panel, and accordingly there is not sufficient space for the dash panel to deform, and impact of the primary collision cannot be absorbed by the steering system.

The present invention has been made in light of the above-mentioned problem, and an object thereof is to provide a steering system that can absorb impact of a primary collision in the event of a collision occurring in a state in which an operating member is disposed forward in a vehicle.

### Means for Solving the Problem

In order to achieve the above object, a steering system according to one aspect of the present invention is for steer-by-wire that holds an operating member movably between a first position that is a position of the operating member at which the operating member is able to be operated by a driver, and a second position that is further forward in a vehicle than the first position, the steering system including a fixed member that is attached to a vehicle body, a movable member that supports the operating member and that is attached to the fixed member so as to be movable in a front-rear direction of the vehicle, a drive device that moves the movable member in the front-rear direction relative to the fixed member and fixes the operating member at the first position and the second position, and an impact absorbing mechanism that is connected between the movable member and the drive device in a manner interposed therebetween, and that, in a case in which a first load is applied to the movable member from forward toward rearward in the vehicle, is deformed by the first load and also allows the movable member to move rearward in the vehicle.

### Effects of the Invention

According to the present invention, the first load on the movable member generated by the primary collision can be absorbed by the impact absorbing mechanism while allowing the movable member to move rearward in the vehicle.

### BRIEF DESCRIPTION OF THE DRAWINGS

[FIG. 1] FIG. 1 is a perspective view illustrating a steering system in which an operating member is disposed in a first position.
[FIG. 2] FIG. 2 is a perspective view illustrating the steering system in which the operating member is disposed in a second position.
[FIG. 3] FIG. 3 is a perspective view illustrating an impact absorbing mechanism and a vicinity thereof.
[FIG. 4] FIG. 4 is a perspective view illustrating the impact absorbing mechanism.
[FIG. 5] FIG. 5 is a cross-sectional view of a movable-side attaching member and a vicinity thereof, taken along a plane orthogonal to a front-rear direction.
[FIG. 6] FIG. 6 is a perspective view illustrating a state in which a deformable member is deformed under a first load.
[FIG. 7] FIG. 7 is a perspective view illustrating a state in which the deformable member is deformed under a second load.
[FIG. 8] FIG. 8 is a perspective view illustrating a Variant Example 1 of the impact absorbing mechanism.
[FIG. 9] FIG. 9 is a perspective view illustrating a Variant Example 2 of the impact absorbing mechanism.
[FIG. 10] FIG. 10 is a plan view illustrating the Variant Example 2 of the impact absorbing mechanism in a partially transparent state.
[FIG. 11] FIG. 11 is a perspective view illustrating a Variant Example 3 of the impact absorbing mechanism.

### MODES FOR CARRYING OUT THE INVENTION

An embodiment of a steering system according to the present invention will be described below with reference to the drawings. Note that the following embodiment demonstrates an example in order to describe the present invention, and is not intended to limit the present invention. For example, the shapes, structures, materials, components, relative positional relations, connection states, numerical values, mathematical expressions, and content of the steps of methods, order and so forth of the steps, and so forth, demonstrated in the following embodiment, are merely exemplary, and there are cases in which the embodiment includes content that is not described below. Although geometric terms such as parallel, orthogonal, and so forth are used in some cases, these terms are not used in a mathematically strict sense, and may include substantially allowable margins, deviations, and so forth. Also, terms such as simultaneously, same, and so forth, also include substantially allowable ranges.

Also, the drawings are schematic illustrations with exaggerations, omissions, or adjustments of proportions made as appropriate in order to describe the present invention, and the illustrations in the drawings are different from actual shapes, positional relations, and proportions. Also, X-axis, Y-axis, and Z-axis that are in the drawings in some cases indicate orthogonal coordinates that are optionally set in order to explain the drawings. That is to say, the Z-axis is not necessarily an axis in a vertical direction, and the X-axis and the Y-axis are not necessarily present in a horizontal plane.

Also, there are cases in which a plurality of inventions are comprehensively described as one embodiment below. Also, part of the content provided below is described as optional components related to the present invention.

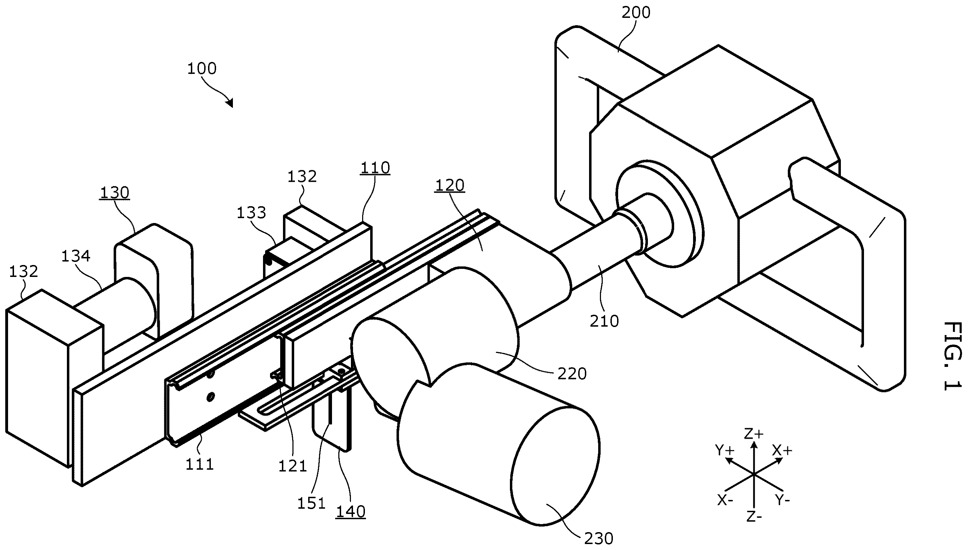

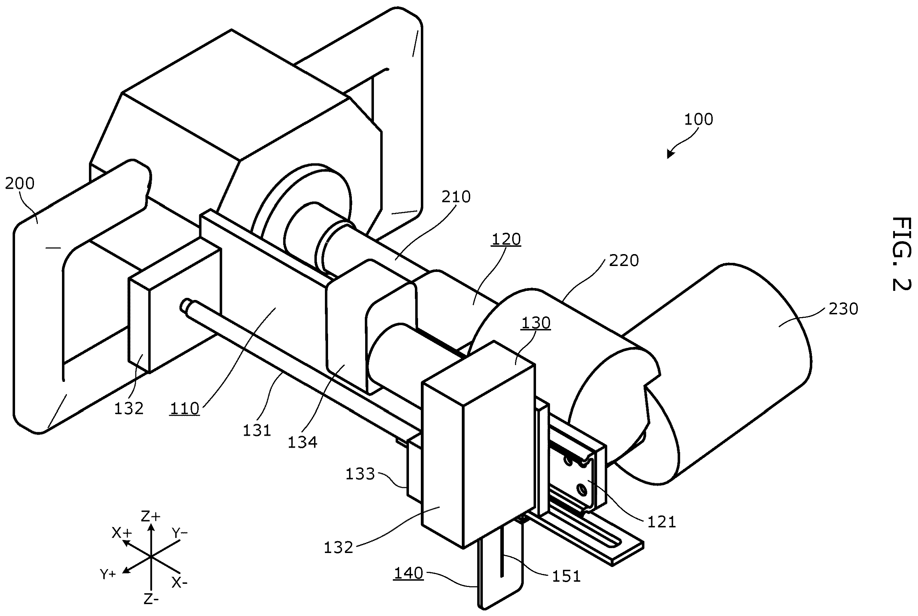

FIG. 1 is a perspective view illustrating a steering system 100 in which an operating member 200 is disposed in a first position. FIG. 2 is a perspective view illustrating the steering system 100 in which the operating member 200 is disposed in a second position. The steering system 100 is a device used for steer-by-wire, in which the operating member 200 is held so as to be movable between a first position (see FIG. 1), which is a position of the operating member 200 at which the driver can operate the operating member 200, and a second position (see FIG. 2), which is further forward in a vehicle than the first position. In the case of the present embodiment, the second position is a position at which at least part of the operating member 200 is stored (accommodated) in a dashboard, an instrument panel, or the like, provided in the vehicle. Steer-by-wire (SBW: Steer By Wire) refers to an electronically controlled system in which the operating member 200 and steered wheels that the vehicle is equipped with are not mechanically connected, and the steered wheels are steered based on information from the driver operating the operating member 200. Note that, steer-by-wire also includes a system in which the operating member 200 and the steered wheels are mechanically connected, and when automated driving is performed, the mechanical connection between the operating member 200 and the steered wheels is disconnected and control is performed electronically. The steering system 100 includes a fixed member 110, a movable member 120, a drive device 130, and an impact absorbing mechanism 140.

The operating member 200 is attached to an end portion of a column shaft 210 that is attached to the movable member 120. Also, at an end portion of the column shaft 210 on a side opposite to the end portion where the operating member 200 is attached, there are attached a sensor box 220 which accommodates sensors that detect a rotation angle at which the driver rotates the operating member 200, torque that is applied to the column shaft 210, and so forth, and a reaction force device 230 which imparts the driver with a feel of steering when the driver operates the operating member 200.

The fixed member 110 is a member that is fixedly attached to a part of a vehicle body, such as for example, a structural member like a reinforcement or the like. The form in which the fixed member 110 is attached to the vehicle body is not limited, but for example, the fixed member 110 is attached in a state of being suspended from a reinforcement spans a width direction of the vehicle body. The shape of the fixed member 110 is not limited, and is optionally selected in accordance with the shape of the vehicle body, and so forth. Also, in the drawings, the fixed member 110 is illustrated in a simplified shape, in order to illustrate the impact absorbing mechanism 140 and so forth. In the case of the present embodiment, the fixed member 110 has a fixed rail 111 fixedly attached thereto, which extends in a front-rear direction of the vehicle (X-axis direction in the drawing). Note that the term "front-rear direction" does not strictly refer to just the front-rear direction within a horizontal plane, but also includes directions inclined to around an angle of the steering system 100, attached to the vehicle body, relative to the horizontal plane.

The movable member 120 is a member that supports the operating member 200 and is attached such that the operating member 200 that is supported can move between the first position, which is a position rearward in the vehicle (X+ side in the drawing), and the second position, which is a position forward in the vehicle (X- side in the drawing), relative to the fixed member 110. The shape of the movable member 120 is not limited, and is optionally selected in accordance with the shape of the vehicle body, and so forth. Also, in the drawings, the movable member 120 is illustrated in a simplified form. In the case of the present embodiment, the movable member 120 includes a movable rail 121 attached to the fixed rail 111 so as to be reciprocally movable in the front-rear direction of the vehicle. In the case of the present embodiment, the fixed rail 111 and the movable rail 121 are connected to each other so as to be linearly movable by two rows of balls (omitted from illustration), held by a retainer, that are interposed therebetween.

In the case of the present embodiment, in a state in which the operating member 200 is disposed in the second position, a forward (X- side in FIG. 2) edge of the movable member 120 is disposed in a state of protruding further forward than a forward end portion of the fixed member 110. Accordingly, in the event a collision occurring in a state in which the operating member 200 is disposed in the second position, such as during automated driving or the like, the dash panel moving rearward in the vehicle will collide with the movable member 120 before the fixed member 110, thereby pushing the movable member 120 rearward in the vehicle relative to the fixed member 110.

The drive device 130 is a device that can reciprocally move the movable member 120 in the front-rear direction relative to the fixed member 110, and fix the operating member 200 at the first position and the second position. The type of the drive device 130 is not limited. In the case of the present embodiment, the drive device 130 includes a feed screw 131 that is disposed extending in the movement direction of the movable member 120, brackets 132 that each hold respective ends of the feed screw 131 so as to be rotatable about an axis, a nut member 133 that meshes with the feed screw 131 and reciprocally moves in a movement direction of the movable member 120 as the feed screw 131 rotates, and a rotating drive device 134 that includes a motor and a reducer that rotates the feed screw 131.

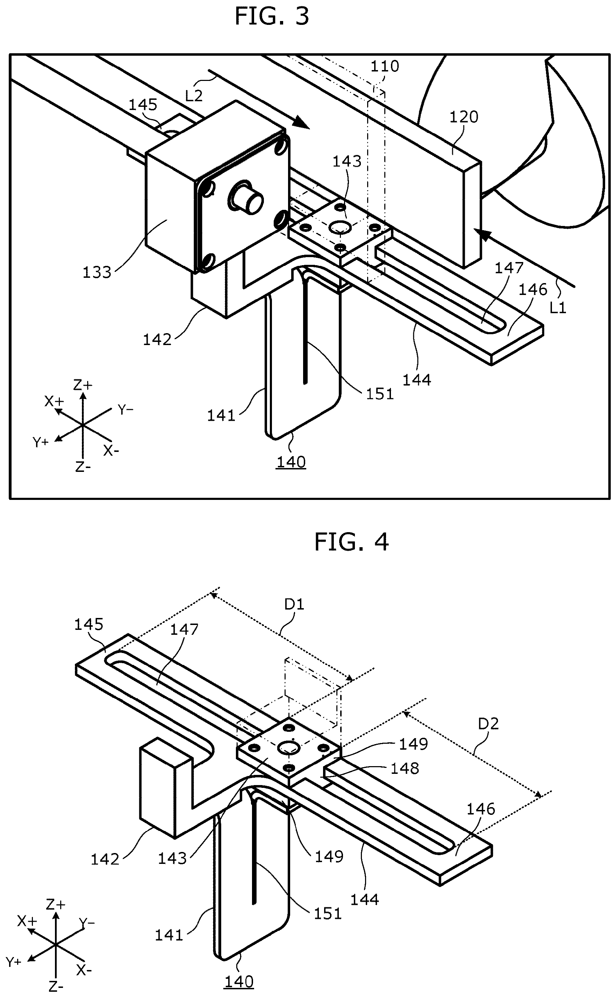

FIG. 3 is a perspective view illustrating the impact absorbing mechanism 140 and a vicinity thereof. FIG. 4 is a perspective view illustrating the impact absorbing mechanism 140. The impact absorbing mechanism 140 is a mechanism that is connected interposed between the movable member 120 and a reciprocating member (nut member 133 in the case of the present embodiment) inside the drive device 130, and when a first load L1 is applied to the movable member 120 from forward in the vehicle (X- side in the drawings) toward rearward in the vehicle (X+ side in the drawings), the impact absorbing mechanism 140 is deformed by the first load L1, and also allows the movable member 120 to move rearward in the vehicle, thereby absorbing the impact. Note that deformation refers to a change in the shape of a member or the overall shape of a structure, and includes deformation due to plastic deformation, fracturing, destruction, and so forth, as well as differences in relative positions of a plurality of members in a structure.

In the case of the present embodiment, in a case in which a second load L2 is applied to the movable member 120 from rearward to forward in the vehicle, the impact absorbing mechanism 140 deforms due to the second load L2, and also allows the movable member 120 to move forward in the vehicle, whereby the impact can be absorbed.

The structure of the impact absorbing mechanism 140 is not limited. In the case of the present embodiment, the impact absorbing mechanism 140 includes a deformable member 141, a fixed-side attaching member 142, a movable-side attaching member 143, and a restricting member 144.

The deformable member 141 is a member that deforms as the movable-side attaching member 143 moves rearward in the vehicle relative to the fixed-side attaching member 142 under the first load L1, and absorbs the impact of the first load L1 with a predetermined profile through deformation. In the case of the present embodiment, the deformable member 141 can also absorb the impact based on the second load L2 by deforming in a manner different from the deformation based on by the first load L1.

The shape of the deformable member 141 is not limited. In the case of the present embodiment, the deformable member 141 is a plate-shaped member that is disposed to extend in a plane (YZ plane in the drawings) that intersects the front-rear direction (X-axis direction in the drawings), and is a rectangular member that is elongated in an up-down direction (Z-axis direction in the drawings). A notch 151 extending from an upper end of the deformable member 141 to a lower end portion thereof is provided in an intermediate portion thereof in the width direction (Y-axis direction in the drawings). The notch 151 divides a part of the deformable member 141 into right and left parts, and the deformable member 141 has a letter-U shape as viewed from the front-rear direction. One of the divided parts at the upper end portion of the deformable member 141 is bent to follow a plane including the front-rear direction and the width direction (XY plane in the drawings) in order to join with the fixed-side attaching member 142, and the other part is bent toward the opposite side from the one part to follow a horizontal plane (XY plane in the drawings) in order to join with the movable-side attaching member 143.

The fixed-side attaching member 142 is a member that reciprocally moves in the front-rear direction under to the driving force of the drive device 130, and is a member that fixedly connects the nut member 133, which is fixed in the front-rear direction in a state in which the drive device 130 is stopped, to one side of the deformable member 141 in the width direction.

The movable-side attaching member 143 is a member that fixedly connects the movable member 120 and the other of the deformable member 141 in the width direction. Specific shapes will be described later.

The shape of the restricting member 144 is not limited. In the case of the present embodiment, the restricting member 144 is a plate-like member extending in a plane including the front-rear direction and the width direction, and has a slot 147 extending in the front-rear direction and passing through in the up-down direction. In the case of the present embodiment, the restricting member 144 is integrally formed with the fixed-side attaching member 142.

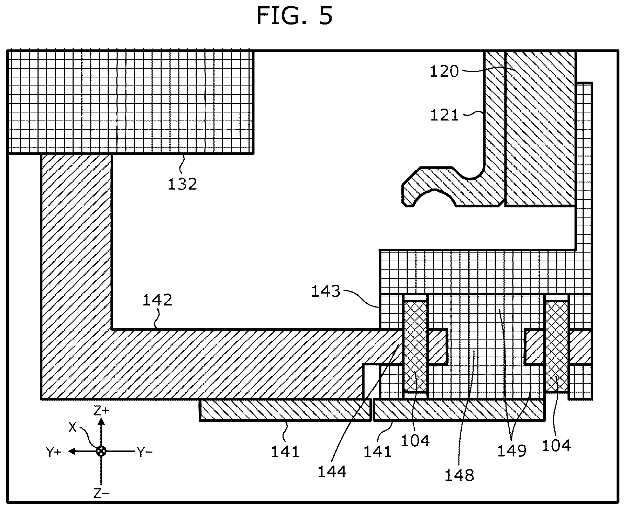

FIG. 5 is a cross-sectional view of the movable-side attaching member 143 and a vicinity thereof, taken along a plane orthogonal to the front-rear direction. The shape of the movable-side attaching member 143 is not limited, but in the case of the present embodiment, the movable-side attaching member 143 has a letter-H shape, and has a through portion 148 that passes through the slot 147 of the restricting member 144 and a clamping portion 149 that clamps the restricting member 144 from both the up and down sides. The restricting member 144 and the clamping portion 149 of the movable member 120 are fixed in common by a fracturing member 104 which is disposed passing therethrough. Under normal circumstances, the fracturing member 104 fixes the restricting member 144 and the movable-side attaching member 143, enabling movement thereof together in the front-rear direction, and when the first load L1 or the second load L2 is applied, fractures at an early stage so as to separate into up and down halves thereof, allowing the restricting member 144 and the movable-side attaching member 143 to move relative to each other in the front-rear direction.

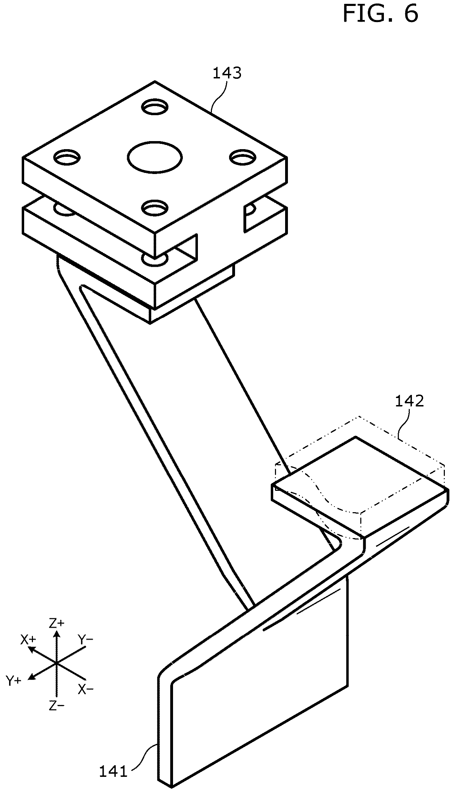

FIG. 6 is a perspective view illustrating a state in which the deformable member 141 is deformed by the first load L1. Upon receiving the first load L1, the movable-side attaching member 143 moves rearward in the vehicle relative to the fixed-side attaching member 142, causing the deformable member 141 to deform into a V-shape. The deformation of the deformable member 141 absorbs the impact based on the first load L1. Also, an end portion of the restricting member 144 on the vehicle rearward side restricts movement of the movable-side attaching member 143 relative to the restricting member 144 to a first distance D1 (see FIG. 4) upon receiving the first load L1, and functions as first restricting means 145 stopping the deformation of the deformable member 141 and restricting movement of the movable member 120 rearward in the vehicle.

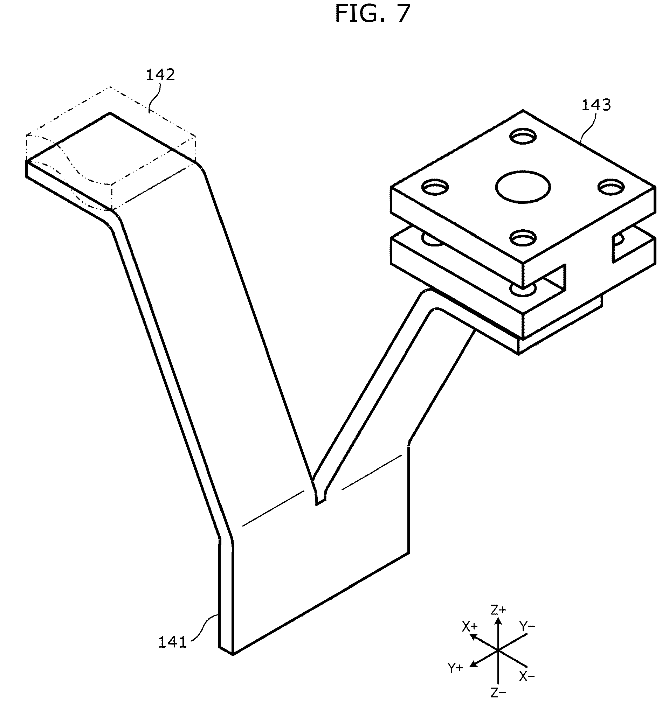

FIG. 7 is a perspective view illustrating a state in which the deformable member 141 is deformed by the second load L2. Upon receiving the second load L2, the movable-side attaching member 143 moves forward in the vehicle relative to the fixed-side attaching member 142, causing the deformable member 141 to deform into a V-shape. The deformation of the deformable member 141 absorbs the impact based on the second load L2. Also, an end portion of the restricting member 144 on the vehicle forward side restricts movement of the movable-side attaching member 143 relative to the restricting member 144 to a second distance D2 (see FIG. 4) upon receiving the second load L2, and functions as second restricting means 146 stopping the deformation of the deformable member 141 and restricting movement of the movable member 120 forward in the vehicle.

Note that the present invention is not limited to the above embodiment. For example, the present invention may include, as embodiments thereof, other embodiments that are realized by optionally combining the components described in the present specification or by omitting some of the components. The present invention also includes modifications obtained by making various changes that are conceivable by those skilled in the art to the above embodiment without departing from the spirit and scope of the present invention, that is to say, from the meaning of the language set forth in the claims.

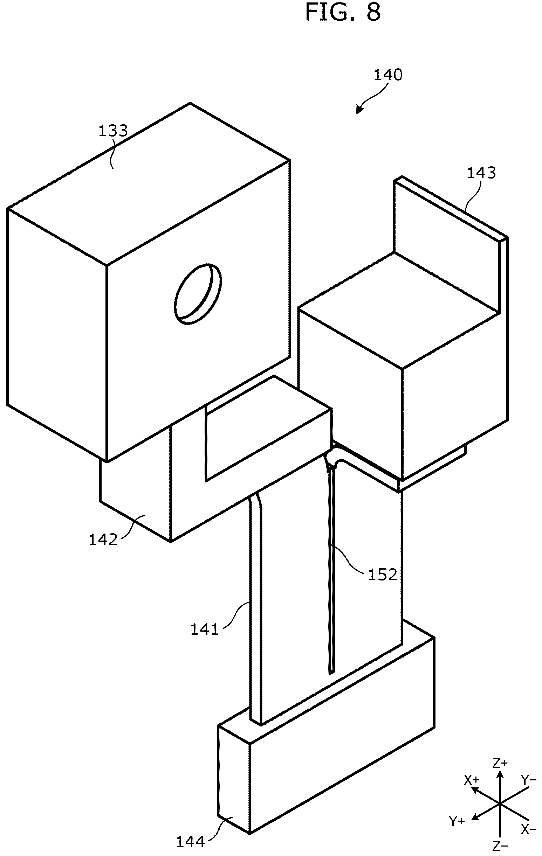

FIG. 8 is a perspective view illustrating a Variant Example 1 of the impact absorbing mechanism 140. As illustrated in this drawing, the restricting member 144 provided in the impact absorbing mechanism 140 may structurally reinforce a lower side end portion of the deformable member 141 and stop the deformation of the deformable member 141 under the first load L1 or the second load L2 in a predetermined shape, thereby restricting the movement of the movable member 120 rearward or forward in the vehicle.

Also, instead of providing the notch that passes through in a thickness direction between the portion of the deformable member 141 on which the fixed-side attaching member 142 is attached and the portion thereof on which the movable-side attaching member 143 is attached, a thin-walled portion 152 may be provided by a groove extending up and down to make the portion thin-walled. In this case, the impact is absorbed by fracturing of the thin-walled portion 152 and the deformation of the deformable member 141 under the first load L1 or the second load L2.

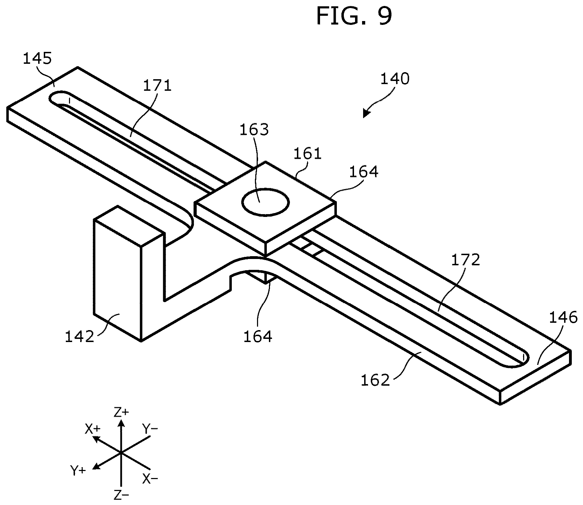

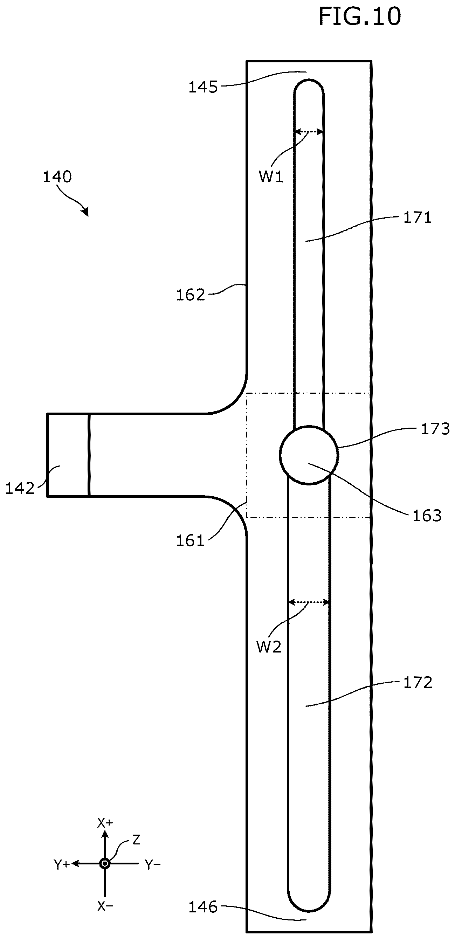

FIG. 9 is a perspective view illustrating a Variant Example 2 of the impact absorbing mechanism 140. FIG. 10 is a plan view illustrating the Variant Example 2 of the impact absorbing mechanism 140 in a partially transparent state. As illustrated in these drawings, the impact absorbing mechanism 140 may be a mechanism that includes a first member 161 fixed to the movable member 120 and a second member 162 fixed to a reciprocally moving member of the drive device 130, and that absorbs impact by the first member 161 and the second member 162 moving relatively in the front-rear direction of the vehicle. In the Variant Example 2, the second member 162 has a first deformation hole 171 and a second deformation hole 172 which are slots extending in the front-rear direction of the vehicle and passing through in the up-down direction. The second member 162 is also provided with a fixing hole 173 that is cylindrical in shape and is disposed between the first deformation hole 171 and the second deformation hole 172, and that communicates with the first deformation hole 171 and the second deformation hole 172. The first member 161 has an insertion portion 163 that is cylindrical, of which a diameter is larger than at least a width W1 of the first deformation hole 171 and a width W2 of the second deformation hole 172, and which can be inserted into the fixing hole 173, and a guide body 164 which is guided in a state with a plate-like portion of the second member 162 clamped thereby.

According to the impact absorbing mechanism 140 of the Variant Example 2, the first member 161 attached to the movable member 120 moves rearward in the vehicle when subjected to the first load L1, relative to the second member 162 attached to the nut member 133 of the drive device 130. This movement causes the first deformation hole 171 to be deformed so as to widen due to the insertion portion 163. The deformation of this first deformation hole 171 absorbs the impact based on the first load L1. Also, an end portion of the first deformation hole 171 on the vehicle rearward side functions as the first restricting means 145 restricting movement of the first member 161 relative to the second member 162 to a predetermined distance, when subjected to the first load L1.

Also, the first member 161 attached to the movable member 120 moves forward in the vehicle relative to the second member 162 attached to the nut member 133 of the drive device 130, when subjected to the second load L2. This movement causes the second deformation hole 172 to be deformed so as to widen due to the insertion portion 163. The deformation of this second deformation hole 172 absorbs the impact based on the second load L2. Also, an end portion of the second deformation hole 172 on the vehicle forward side functions as the second restricting means 146 restricting the movement of the first member 161 relative to the second member 162 to a predetermined distance, when subjected to the second load L2.

Also, the width W1 of the first deformation hole 171 is narrower than the width W2 of the second deformation hole 172, and accordingly the amount of impact absorbed due to the relative movement of the first member 161 and the second member 162 based on the first load L1 is greater than the amount of impact absorbed due to the relative movement of the first member 161 and the second member 162 based on the second load L2.

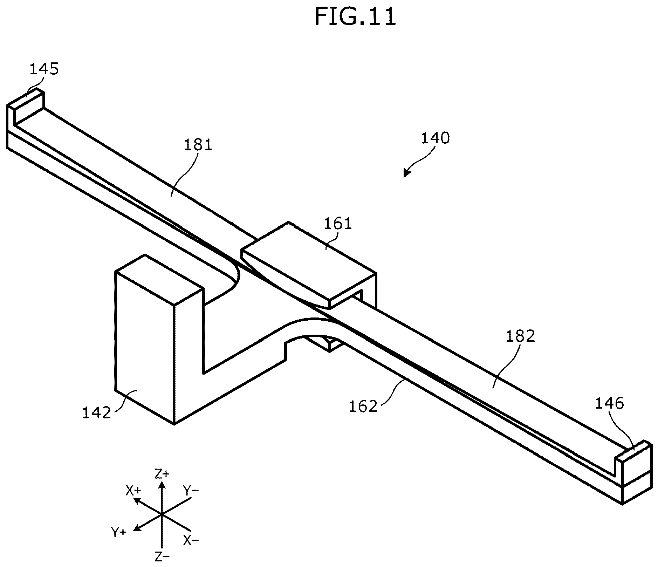

FIG. 11 is a perspective view illustrating a Variant Example 3 of the impact absorbing mechanism 140. As illustrated in this diagram, the impact absorbing mechanism 140 of the Variant Example 3 is also a mechanism that absorbs impact by the first member 161 and the second member 162 moving relatively in the front-rear direction of the vehicle. In the Variant Example 3, the second member 162 is a plate-shaped member extending in the front-rear direction of the vehicle, and has a first slope 181 and a second slope 182 that each slope upward from a middle portion in the front-rear direction toward both end portions. The first member 161 is a member that can clamp the second member 162 from the up-down direction, and is press-fitted into an intermediate portion of the second member 162.

According to the impact absorbing mechanism 140 of the Variant Example 3, the first member 161 attached to the movable member 120 moves rearward in the vehicle when subjected to the first load L1, relative to the second member 162 attached to the nut member 133 of the drive device 130. This movement causes the first member 161 to deform such that a spacing in the up-down direction widens due to the first slope 181. The impact based on the first load L1 is absorbed by the deformation of the first member 161. Also, an end portion of the first slope 181 on the vehicle rearward side is provided with first restricting means 145 restricting the movement of the first member 161 relative to the second member 162 to a predetermined distance, when subjected to the first load L1.

Also, the first member 161 attached to the movable member 120 moves forward in the vehicle relative to the second member 162 attached to the nut member 133 of the drive device 130, when subjected to the second load L2. This movement causes the first member 161 to deform such that the spacing in the up-down direction widens due to the second slope 182. The impact due to the second load L2 is absorbed by the deformation of the first member 161. Also, an end portion of the second slope 182 on the vehicle forward side is provided with second restricting means 146 restricting the movement of the first member 161 relative to the second member 162 to a predetermined distance, when subjected to the second load L2.

Furthermore, the gradient of the first slope 181 is steeper than the gradient of the second slope 182, and accordingly the amount of impact absorbed by the relative movement of the first member 161 and the second member 162 based on the first load L1 is greater than the amount of impact absorbed by the relative movement of the first member 161 and the second member 162 based on the second load L2.

A first aspect of a steering system 100 for steer-by-wire that holds an operating member 200 movably between a first position, which is a position of the operating member 200 at which the operating member can be operated by a driver, and a second position that is further forward in the vehicle than the first position, is a steering system 100 that includes a fixed member 110 that is attached to a vehicle body, a movable member 120 that supports the operating member 200 and that is attached to the fixed member 110 so as to be movable in a front-rear direction of the vehicle, a drive device 130 that moves the movable member 120 in the front-rear direction relative to the fixed member 110 and fixes the operating member 200 at the first position and the second position, and an impact absorbing mechanism 140 that is connected between the movable member 120 and the drive device 130 in a manner interposed therebetween, and that, in a case in which a first load L1 is applied to the movable member 120 from forward toward rearward in the vehicle, is deformed by the first load L1 and also allows the movable member 120 to move rearward in the vehicle.

According to the first aspect of the steering system 100, impact of the first load L1 on the movable member 120 generated by a primary collision of the vehicle equipped with the steering system 100 is absorbed by the impact absorbing mechanism 140, while allowing the movable member 120 to move rearward in the vehicle. That is to say, conventionally, when a collision occurred in a state in which the operating member 200 was stored inside a dashboard, a column shaft 210 that holds the operating member 200 was present in a vicinity of a vehicle cabin side of a dash panel, and accordingly there was not sufficient space for the dash panel to deform, and impact of the primary collision could not be absorbed by the steering system 100, however, with the steering system 100 according to the first aspect, the movable member 120 is allowed to move rearward in the vehicle, and accordingly impact from the primary impact can be absorbed by the impact absorbing mechanism 140.

The steering system 100 according to a second aspect includes the first aspect, and in the impact absorbing mechanism 140, in a case in which a second load L2 is applied to the movable member 120 from rearward toward forward in the vehicle, the movable member 120 is deformed by the second load L2 and is also allowed to move forward in the vehicle.

According to the second aspect of the steering system 100, a single impact absorbing mechanism 140 can absorb the first load L1 applied to the movable member 120 in the primary collision, and can also absorb the second load L2 applied to the movable member 120 in a secondary collision.

The steering system 100 according to a third aspect includes the first aspect or the second aspect, and the impact absorbing mechanism 140 includes a deformable member 141 of which part is fixed to the movable member 120 and another part is fixed to the drive device 130.

The steering system 100 according to a fourth aspect includes any of the first aspect to the third aspect, and the impact absorbing mechanism 140 includes first restricting means 145 for stopping deformation of the deformable member 141 when subjected to the first load L1, and restricting movement of the movable member rearward in the vehicle to a first distance.

According to the steering system 100 of the fourth aspect, the operating member 200 can be prevented from flying out toward the driver due to the primary collision.

The steering system 100 according to a fifth aspect includes the first aspect or the second aspect, and the impact absorbing mechanism 140 includes a first member 161 that is fixed to the movable member 120, and a second member 162 that is fixed to the drive device 130, and the first member 161 and the second member 162 move relative to each other in the front-rear direction to absorb impact.

According to the steering system 100 of the fifth aspect, friction between the first member 161 and the second member 162 and deformation of at least one of the first member 161 and the second member 162 can absorb at least the impact of the primary collision.

The steering system 100 according to a sixth aspect includes the fifth aspect including the second aspect, in which an amount of impact absorbed by relative movement of the first member 161 and the second member 162 based on the first load L1 is greater than an amount of impact absorbed by relative movement of the first member 161 and the second member 162 based on the second load L2.

The steering system 100 according to a seventh aspect includes the sixth aspect, in which one of the first member 161 and the second member 162 has a slot extending in the front-rear direction, the other of the first member 161 and the second member 162 includes an insertion portion 163 that penetrates the slot, and a width W1 of the slot through which the insertion portion 163 passes under the first load L1 is narrower than a width W2 of a portion of the slot through which the insertion portion 163 passes under the second load L2.

According to the steering system 100 of the sixth aspect and the seventh aspect, the impact that the steering system 100 is subjected to in the primary collision and the impact that the steering system 100 is subjected to in the secondary collision can be appropriately handled.

The steering system 100 according to an eighth aspect includes the fifth aspect, in which the impact absorbing mechanism 140 includes a deformable member 141 of which a part is fixed to the first member 161 and another part is fixed to the second member 162, and the deformable member 141 at least partially fractures under the first load L1, thereby absorbing impact.

According to the steering system 100 of the eighth aspect, the impact can be powerfully absorbed by fracturing of the member.

### INDUSTRIAL APPLICABILITY

The present invention is applicable to a device that can steer vehicles such as automobiles, trucks, buses, construction machines, agricultural machines, and so forth, by steer-by-wire.

### Description of the Reference Numerals

100... steering system, 104... fracturing member, 110... fixed member, 111... fixed rail, 120... movable member, 121... movable rail, 130... drive device, 131... feed screw, 132... bracket, 133... nut member, 134... rotating drive device, 140... impact absorbing mechanism, 141... deformable member, 142... fixed-side attaching member, 143... movable-side attaching member, 144... restricting member, 145... first restricting means, 146... second restricting means, 147... slot, 148... through portion, 149... clamping portion, 151... notch portion, 152... thin-walled portion, 161... first member, 162... second member, 163... insertion portion, 164... guide body, 171... first deformation hole, 172... second deformation hole, 173... fixing hole, 181... first slope, 182... second slope, 200... operating member, 210... column shaft, 220... sensor box, 230... reaction force device

## Claims

1. A steering system for steer-by-wire that holds an operating member movably between a first position that is a position of the operating member at which the operating member is able to be operated by a driver, and a second position that is further forward in a vehicle than the first position, the steering system comprising:
a fixed member that is attached to a vehicle body;
a movable member that supports the operating member and that is attached to the fixed member so as to be movable in a front-rear direction of the vehicle;
a drive device that moves the movable member in the front-rear direction relative to the fixed member and fixes the operating member at the first position and the second position; and
an impact absorbing mechanism that is connected between the movable member and the drive device in a manner interposed therebetween, and that, in a case in which a first load is applied to the movable member from forward toward rearward in the vehicle, is deformed by the first load and also allows the movable member to move rearward in the vehicle.

2. The steering system according to claim 1, wherein, in the impact absorbing mechanism, in a case in which a second load is applied to the movable member from rearward toward forward in the vehicle, the movable member is deformed by the second load and is also allowed to move forward in the vehicle.

3. The steering system according to claim 1 or 2, wherein the impact absorbing mechanism includes a deformable member of which a part is fixed to the movable member and another part is fixed to the drive device.

4. The steering system according to claim 3, wherein the impact absorbing mechanism includes first restricting means for stopping deformation of the deformable member when subjected to the first load, and restricting movement of the movable member rearward in the vehicle to a first distance.

5. The steering system according to claim 1 or 2, wherein:
the impact absorbing mechanism includes
a first member that is fixed to the movable member, and
a second member that is fixed to the drive device; and
the first member and the second member move relative to each other in the front-rear direction to absorb impact.

6. The steering system according to claim 5 that references claim 2, wherein an amount of impact absorbed by relative movement of the first member and the second member based on the first load is greater than an amount of impact absorbed by relative movement of the first member and the second member based on the second load.

7. The steering system according to claim 6, wherein:
one of the first member and the second member has a slot extending in the front-rear direction;
the other of the first member and the second member includes an insertion portion that penetrates the slot; and
a width of the slot through which the insertion portion passes under the first load is narrower than a width of a portion of the slot through which the insertion portion passes under the second load.

8. The steering system according to claim 5, wherein:
the impact absorbing mechanism includes a deformable member of which a part is fixed to the first member and another part is fixed to the second member; and
the deformable member at least partially fractures under the first load to absorb impact.
